# EUROPEAN PATENT APPLICATION

(11) **EP 4 787 800 A1**
(43) Date of publication of application: **05.08.2026**
(21) Application number: 24870376.1
(22) Date of filing: 04.09.2024
(51) Int. Cl.: H04L 43/04

(54) **INFORMATION PROCESSING METHOD AND APPARATUS, DEVICE, AND READABLE STORAGE MEDIUM**

(30) Priority: 26.09.2023 CN 202311249597
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100032 (CN); CHEN, Chao, Beijing 100032 (CN); WEI, Bin, Beijing 100032 (CN)
(74) Representative: Herrero & Asociados, S.L.
(86) International application number: PCT/CN2024/116841
(87) International publication number: WO 2025/066830

(57) **Abstract**

The present application relates to the technical field of communications, and discloses an information processing method and apparatus, a device, and a readable storage medium, used for providing accurate and effective analysis information. The method comprises: receiving a first request sent by a second network function, wherein the first request is used for subscribing to analysis information; and sending the analysis information to the second network function, wherein the analysis information comprises one or more network parameters.

## Description

### CROSS REFERENCE TO RELATED APPLICATIONS

This application claims priority to China Patent Applicant No. 202311249597.9, filed on September 26, 2023 in the China National Intellectual Property Administration, the entire contents of which are incorporated herein by reference.

### TECHNICAL FIELD

Embodiments of the present disclosure relate to the technical field of communications, in particular, to an information processing method, an information processing apparatus, a communication device, and a readable storage medium.

### BACKGROUND

In the related art, a mechanism for collecting/calculating/inferring network big data based on a network data analytics function, currently may only provide two types of analytics results, which are prediction and statistics.

Considering that the network data analytics function may have relatively global and comprehensive knowledge and perspective, how to provide more accurate and effective analytics information based on the network data analytics function is a research direction for those skilled in the art.

### SUMMARY

Some embodiments of the present disclosure provide an information processing method, an information processing apparatus, a communication device, and a readable storage medium, so as to provide accurate and effective analytics information.

In a first aspect, some embodiments of the present disclosure provide an information processing method. The method is applied to a first network function and includes: receiving a first request sent by a second network function, where the first request is configured to subscribe to analytics information; and sending the analytics information to the second network function, where the analytics information includes one or more groups of network parameters.

In some embodiments, the analytics information may include policy recommendation analytics information; and/or the first request may include an expected service experience of the second network function, and the analytics information may be determined or obtained based on the expected service experience.

In some embodiments, the method may further include: receiving user subscription information sent by the second network function.

In some embodiments, the sending the analytics information to the second network function, may include: determining the analytics information based on the user subscription information; and sending the analytics information to the second network function.

In some embodiments, the method may further include: obtaining training data; and performing model training based on the training data to obtain an analytics model. The analytics model may be configured to determine or obtain the analytics information.

In some embodiments, the one or more groups of network parameters may include: one or more groups of Quality of Service (QoS) parameters. The QoS parameters may include one or more of the following: a bit rate, a delay, a jitter, a 5G QoS Identifier (5QI), or a bandwidth.

In some embodiments, the first network function may include a network data analytics function, and the second network function may include a policy control function.

In a second aspect, some embodiments of the present disclosure provide an information processing method. The method is applied to a second network function and includes: sending a first request to a first network function, where the first request is configured to subscribe to analytics information; and receiving analytics information sent by the first network function, where the analytics information includes one or more groups of network parameters.

In some embodiments, the analytics information may include policy recommendation analytics information; and/or the first request may include an expected service experience of the second network function, and the analytics information may be determined or obtained based on the expected service experience.

In some embodiments, the method may further include: sending user subscription information to the first network function.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the method may further include: determining or obtaining a first network parameter based on the analytics information.

In some embodiments, the determining or obtaining the first network parameter based on the analytics information, may include: determining or obtaining the first network parameter based on the analytics information and/or user subscription information; or determining or obtaining the first network parameter based on the analytics information.

In some embodiments, the method may further include: sending the first network parameter to a network function.

In some embodiments, the first network function may include a network data analytics function. The second network function may include a policy control function. The network function may include one or more of the following: a Radio Access Network (RAN) device, a terminal, a session management function, and a user plane function.

In a third aspect, some embodiments of the present disclosure provide an information processing method. The method is applied to a third network function and includes: receiving a first network parameter sent by a second network function; and sending the first network parameter to a fourth network function. The first network parameter is determined by the second network function based on analytics information sent by a first network function, and the analytics information includes one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function. The second network function may include a policy control function. The third network function may include a session management function. The fourth network function may include a user plane function.

In a fourth aspect, some embodiments of the present disclosure provide an information processing method. The method is applied to a fourth network function and includes: receiving a first network parameter sent by a third network function; and performing parameter configuration based on the first network parameter. The first network parameter is determined by a second network function based on analytics information sent by a first network function, the first network parameter is sent by the second network function to the third network function, and the analytics information includes one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function. The second network function may include a policy control function. The third network function may include a session management function. The fourth network function may include a user plane function.

In a fifth aspect, some embodiments of the present disclosure provide an information processing apparatus. The apparatus is applied to a first network function and includes: a first receiving module and a first sending module. The first receiving module is configured to receive a first request sent by a second network function. The first request is configured to subscribe to analytics information. The first sending module is configured to send analytics information to the second network function. The analytics information includes one or more groups of network parameters.

In some embodiments, the analytics information may include policy recommendation analytics information; and/or the first request may include an expected service experience of the second network function, and the analytics information may be determined or obtained based on the expected service experience.

In some embodiments, the apparatus may further include a second receiving module. The second receiving module may be configured to receive user subscription information sent by the second network function.

In some embodiments, the first sending module may be further configured to: determine the analytics information based on the user subscription information; and send the analytics information to the second network function.

In some embodiments, the apparatus may further include a first processing module and a second processing module. The first processing module may be configured to obtain training data. The second processing module may be configured to perform model training based on the training data and obtain an analytics model. The analytics model may be configured to determine or obtain the analytics information.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function, and the second network function may include a policy control function.

In a sixth aspect, some embodiments of the present disclosure provide an information processing apparatus. The apparatus is applied to a second network function and includes: a first sending module and a first receiving module. The first sending module is configured to send a first request to a first network function. The first request is configured to subscribe to analytics information. The first receiving module is configured to receive analytics information sent by the first network function. The analytics information includes one or more groups of network parameters.

In some embodiments, the analytics information may include policy recommendation analytics information; and/or the first request may include an expected service experience of the second network function, and the analytics information may be determined or obtained based on the expected service experience.

In some embodiments, the apparatus may further include a second sending module. The second sending module may be configured to send user subscription information to the first network function.

In some embodiments, the one or more groups of QoS parameters may include one or more of the following: a bit rate, a delay, a jitter, a 5QI, or a bandwidth.

In some embodiments, the apparatus may further include a first processing module. The first processing module may be configured to determine or obtain a first network parameter based on the analytics information.

In some embodiments, the first processing module may be further configured to: determine or obtain the first network parameter based on the analytics information and/or user subscription information; or, determine or obtain the first network parameter based on the analytics information.

In some embodiments, the apparatus may further include a third sending module. The third sending module may be configured to send the first network parameter to a network function.

In some embodiments, the first network function may include a network data analytics function. The second network function may include a policy control function. The network function may include one or more of: a RAN device, a terminal, a session management function, and a user plane function.

In a seventh aspect, some embodiments of the present disclosure provide an information processing apparatus. The apparatus is applied to a third network function and includes: a first receiving module and a first sending module. The first receiving module is configured to receive a first network parameter sent by a second network function. The first sending module is configured to send the first network parameter to a fourth network function. The first network parameter is determined by the second network function based on analytics information sent by a first network function, and the analytics information includes one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function. The second network function may include a policy control function. The third network function may include a session management function. The fourth network function may include a user plane function.

In an eighth aspect, some embodiments of the present disclosure provide an information processing apparatus. The apparatus is applied to a fourth network function and includes: a first receiving module and a first processing module. The first receiving module is configured to receive a first network parameter sent by a third network function. The first processing module is configured to perform parameter configuration based on the first network parameter. The first network parameter is determined by a second network function based on analytics information sent by a first network function, the first network parameter is sent by the second network function to the third network function, and the analytics information includes one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function. The second network function may include a policy control function. The third network function may include a session management function. The fourth network function may include a user plane function.

In a ninth aspect, some embodiments of the present disclosure provide an information processing apparatus. The apparatus is applied to a first network function and includes: a processor and a transceiver. The transceiver is configured to: receive a first request sent by a second network function, where the first request is configured to subscribe to analytics information; and send analytics information to the second network function, where the analytics information includes one or more groups of network parameters.

In some embodiments, the analytics information may include policy recommendation analytics information; and/or the first request may include an expected service experience of the second network function, and the analytics information may be determined or obtained based on the expected service experience.

In some embodiments, the transceiver may be further configured to receive user subscription information sent by the second network function.

In some embodiments, the transceiver may be further configured to: determine the analytics information based on the user subscription information; and send the analytics information to the second network function.

In some embodiments, the processor may be further configured to: obtain training data; and perform model training based on the training data and obtain an analytics model. The analytics model may be configured to determine or obtain the analytics information.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function, and the second network function may include a policy control function.

In a tenth aspect, some embodiments of the present disclosure provide an information processing apparatus. The apparatus is applied to a second network function and includes: a processor and a transceiver. The transceiver is configured to: send a first request to a first network function, where the first request is configured to subscribe to analytics information; and receive analytics information sent by the first network function, where the analytics information includes one or more groups of network parameters.

In some embodiments, the analytics information may include policy recommendation analytics information; and/or the first request may include an expected service experience of the second network function, and the analytics information may be determined or obtained based on the expected service experience.

In some embodiments, the processor may be further configured to send user subscription information to the first network function.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the processor may be further configured to: determine or obtain a first network parameter based on the analytics information.

In some embodiments, the processor may be further configured to: determine or obtain the first network parameter based on the analytics information and/or user subscription information; or, determine or obtain the first network parameter based on the analytics information.

In some embodiments, the transceiver may be further configured to send the first network parameter to a network function.

In some embodiments, the first network function may include a network data analytics function. The second network function may include a policy control function. The network function may include one or more of: a RAN device, a terminal, a session management function, and a user plane function.

In an eleventh aspect, some embodiments of the present disclosure provide an information processing apparatus. The apparatus is applied to a third network function and includes: a processor and a transceiver. The transceiver is configured to: receive a first network parameter sent by a second network function; and send the first network parameter to a fourth network function. The first network parameter is determined by the second network function based on analytics information sent by a first network function, and the analytics information includes one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function. The second network function may include a policy control function. The third network function may include a session management function. The fourth network function may include a user plane function.

In a twelfth aspect, some embodiments of the present disclosure provide an information processing apparatus. The apparatus is applied to a fourth network function and includes: a processor and a transceiver. The transceiver is configured to receive a first network parameter sent by a third network function. The processor is configured to perform parameter configuration based on the first network parameter. The first network parameter is determined by a second network function based on analytics information sent by a first network function, the first network parameter is sent by the second network function to the third network function, and the analytics information includes one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function. The second network function may include a policy control function. The third network function may include a session management function. The fourth network function may include a user plane function.

In a thirteenth aspect, some embodiments of the present disclosure provide a communication device. The communication device includes a memory, a processor, and a program stored in the memory and executable on the processor. The processor is configured to execute the program to perform an operation of the information processing method above.

In a fourteenth aspect, some embodiments of the present disclosure provide a readable storage medium. The readable storage medium is configured to store a program. When the program is executed by a processor, an operation of the information processing method above is performed.

In some embodiments of the present disclosure, the first network function may provide analytics information to the second network function based on the first request of the second network function. The analytics information may include one or more groups of network parameters. Accordingly, the first network function may provide accurate and effective analytics information to the second network function.

### BRIEF DESCRIPTION OF THE DRAWINGS

FIG. 1 is a first flowchart of an information processing method provided by some embodiments of the present disclosure.
FIG. 2 is a second flowchart of the information processing method provided by some embodiments of the present disclosure.
FIG. 3 is a third flowchart of the information processing method provided by some embodiments of the present disclosure.
FIG. 4 is a fourth flowchart of the information processing method provided by some embodiments of the present disclosure.
FIG. 5 is a fifth flowchart of the information processing method provided by some embodiments of the present disclosure.
FIG. 6 is a schematic view of a processing procedure provided by some embodiments of the present disclosure.
FIG. 7 is a first schematic structural view of an information processing apparatus provided by some embodiments of the present disclosure.
FIG. 8 is a second schematic structural view of the information processing apparatus provided by some embodiments of the present disclosure.
FIG. 9 is a third schematic structural view of the information processing apparatus provided by some embodiments of the present disclosure.
FIG. 10 is a fourth schematic structural view of the information processing apparatus provided by some embodiments of the present disclosure.
FIG. 11 is a fifth schematic structural view of the information processing apparatus provided by some embodiments of the present disclosure.
FIG. 12 is a sixth schematic structural view of the information processing apparatus provided by some embodiments of the present disclosure.
FIG. 13 is a seventh schematic structural view of the information processing apparatus provided by some embodiments of the present disclosure.
FIG. 14 is an eighth schematic structural view of the information processing apparatus provided by some embodiments of the present disclosure.

### DETAILED DESCRIPTION

In the embodiments of the present disclosure, the term "and/or" may be used to describe an association relationship between associated objects, and may indicate that three relationships exist. For example, A and/or B may indicate: A alone exists, both A and B exist, or B alone exists. The character "/" may generally indicate that the associated objects before and after have an "or" relationship.

In the embodiments of the present disclosure, the term "multiple" or "plurality of" may refer to two or more, and other quantifiers may be similar thereto.

Some technical solutions in the embodiments of the present disclosure may be clearly and completely described below with reference to the accompanying drawings in the embodiments of the present disclosure. Apparently, the described embodiments may be merely a part of the embodiments of the present disclosure, rather than all embodiments. Based on the embodiments of the present disclosure, all other embodiments obtained by those skilled in the art without creative efforts may fall within the protection scope of the present disclosure.

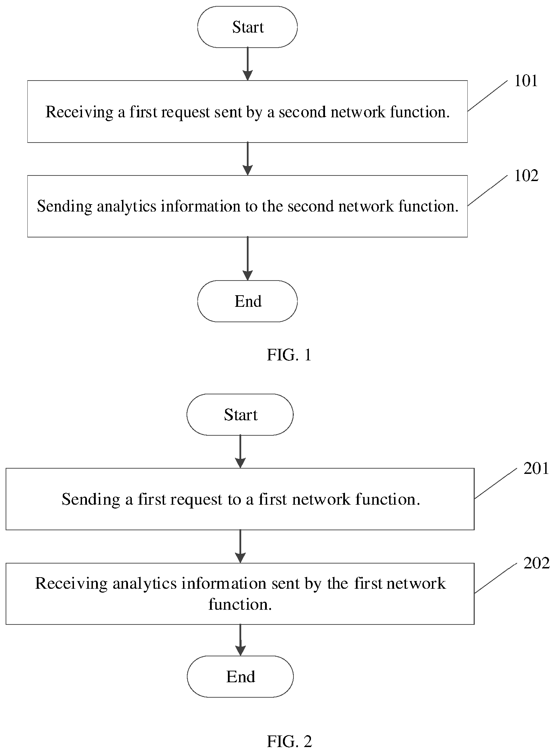

As shown in FIG. 1, FIG. 1 is a flowchart of an information processing method provided by some embodiments of the present disclosure, which may be applied to or applied to a first network function. The first network function may include a network data analytics function. For example, the first network function may include a Network Data Analytics Function (NWDAF), a device or entity having a network analytics function, and the like. As shown in FIG. 1, the method may include the following operations.

At operation 101, a first request sent by a second network function may be received. The first request may be configured to subscribe to analytics information.

In some embodiments, the analytics information may include policy recommendation analytics information and the like. The policy recommendation analytics may include, but may not be limited to, a recommendation or suggestion for policy control at granularities such as a terminal, a slice, and the like. In some embodiments of the present disclosure, a specific implementation form of the first request may not be limited.

In some embodiments, the first request may include an expected service experience of the second network function, for example, a Mean Opinion Score (MOS) value. The analytics information may be determined or derived or got or acquired or obtained, etc., based on the expected service experience. For example, the first network function may determine or obtain the analytics information based on the expected service experience. In this way, the analytics information provided from the first network function may desirably meet requirements of the second network function.

At operation 102, analytics information may be sent to the second network function. The analytics information may include one or more groups of network parameters.

In applications, the first network function may perform analysis based on collected data and the like, and may obtain the analytics information. The collected data may come from multiple network elements or devices, such as a Radio Access Network (RAN), a Session Management Function (SMF), an Operation Administration and Maintenance (OAM), and the like. In some embodiments, the first network function may be configured to obtain training data, perform model training based on the training data, and obtain an analytics model. The analytics model may be configured to determine or obtain the analytics information. The training data may come from multiple network elements or devices, such as RAN, SMF, OAM, and the like. That is, the first network function may obtain the analytics information based on the analytics model. In some embodiments of the present disclosure, the analytics model may be implemented in various forms, such as a neural network model and the like. In some embodiments, the first network function, when determining the analytics information, may further be configured to perform analytical inference using real-time data collected from the network elements or devices.

In some embodiments, the first network function may further be configured to receive user subscription information sent by the second network function, such as different user types including gold, silver, bronze, and the like. Accordingly, the first network function may determine the analytics information based on the user subscription information, and may send the analytics information to the second network function. In some embodiments, the first network function may obtain the analytics information based on the analytics model and the user subscription information.

The one or more groups of network parameters may include: one or more groups of Quality of Service (QoS) parameters. The QoS parameters may include one or more of the following: a bit rate, a delay, a jitter, a 5G QoS Identifier (5QI), or a bandwidth. For example, a Total Maximum Bit Rate (MBR) and a Guaranteed Bit Rate (GBR).

A parameter of the 5QI may include: an updated value of a parameter corresponding to the 5QI and/or a customized 5QI.

The updated value of the parameter corresponding to the 5QI may refer to an updated value of a parameter of a standardized 5QI value (for example, a standardized 5QI defined in a standard).

The customized 5QI may refer to a redefined and concrete 5QI value. For example, in a case where a value range of a parameter is defined as 1-9 in a standard, the value range may be redefined herein as 10-255, and the like.

In some embodiments of the present disclosure, the second network function may be a policy control function, such as a Policy Control Function (PCF), a device or entity having a policy control function, and the like.

In some embodiments of the present disclosure, the first network function may provide analytics information to the second network function based on the first request of the second network function. The analytics information may include one or more groups of network parameters. Accordingly, the first network function may provide accurate and effective analytics information to the second network function.

As shown in FIG. 2, FIG. 2 is a flowchart of the information processing method provided by some embodiments of the present disclosure, which may be applied to or applied to a second network function. The second network function may include a policy control function, for example, may include a PCF, a device or entity having a policy control function, and the like. As shown in FIG. 2, the method may include the following operations.

At operation 201, a first request may be sent to a first network function. The first request may be configured to subscribe to analytics information.

The explanation and meaning of the first request and the analytics information may refer to the descriptions in the foregoing method embodiments.

At operation 202, analytics information sent by the first network function may be received. The analytics information may include one or more groups of network parameters.

The one or more groups of network parameters may include: one or more groups of Quality of Service (QoS) parameters. The QoS parameters may include one or more of the following: a bit rate, a delay, a jitter, a 5G QoS Identifier (5QI), or a bandwidth. For example, a Total Maximum Bit Rate (MBR), a Guaranteed Bit Rate (GBR).

The updated value of the parameter corresponding to the 5QI may refer to an updated value of a parameter of a standardized 5QI value (for example, a standardized 5QI defined in a standard).

The customized 5QI may refer to a redefined and concrete 5QI value. For example, in a case where a value range of a parameter is defined as 1-9 in a standard, the value range may be redefined herein as 10-255, and the like.

In some embodiments, some embodiments of the present disclosure may further include: determining or obtaining a first network parameter based on the analytics information.

In some embodiments, the second network function may further be configured to send user subscription information to the first network function, such as different user types including gold, silver, bronze, and the like. In this case, the analytics information may be determined or obtained based on the user subscription information. Then, the second network function may determine or derive or get or acquire or obtain, etc., the first network parameter based on the analytics information. The first network parameter may be selected from the one or more groups of network parameters.

In some embodiments, in a case where the second network function fails to send the user subscription information to the first network function, the second network function may be configured to determine or obtain the first network parameter based on the analytics information and/or the user subscription information. For example, the second network function may perform local decision-making based on the analytics information and the user subscription information to determine the first network parameter.

In some embodiments, in a case where the analytics information includes a group of network parameters, the second network function may directly take the group of network parameters as the first network parameter.

In some embodiments of the present disclosure, the first network function may provide analytics information to the second network function based on the first request of the second network function. The analytics information may include one or more groups of network parameters. Accordingly, the first network function may provide accurate and effective analytics information to the second network function.

In some embodiments, the second network function may further be configured to send the first network parameter to a network function, so as to facilitate parameter configuration and the like by the network function. The network function may include one or more of: a Radio Access Network (RAN) device, a terminal, a Session Management Function (e.g., SMF and etc.), and a User Plane Function (e.g., UPF and etc.).

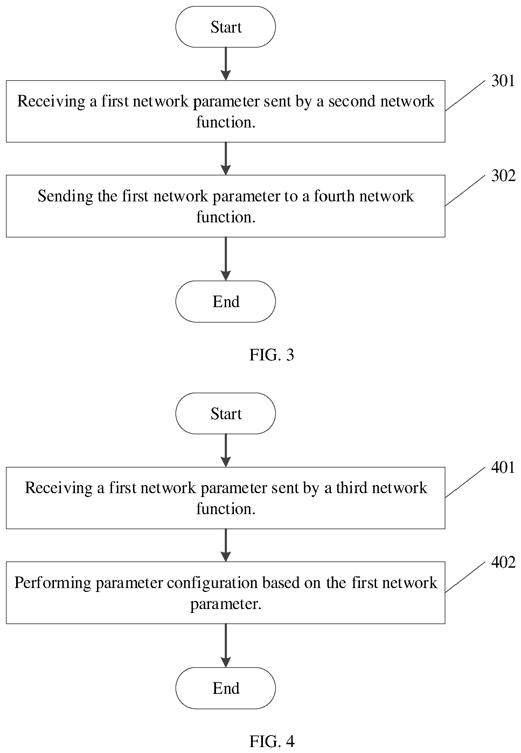

As shown in FIG. 3, FIG. 3 is a flowchart of the information processing method provided by some embodiments of the present disclosure, which may be applied to or applied to a third network function. The third network function may include a session management function, for example, may include an SMF, a device or entity having a session management function, and the like. As shown in FIG. 3, the method may include the following operations.

At operation 301, a first network parameter sent by a second network function may be received.

At operation 302, the first network parameter may be sent to a fourth network function.

The first network parameter may be determined by the second network function based on the analytics information sent by the first network function. The analytics information may include one or more groups of network parameters.

The explanations and meanings of the analytics information, the one or more groups of network parameters, and the analytics information may refer to the descriptions in the foregoing method embodiments. The fourth network function may be a user plane function, such as a UPF, a device or entity having a user plane function, and the like.

The third network function may further be configured to perform parameter configuration and the like based on the first network parameter.

In some embodiments of the present disclosure, the first network function may provide analytics information to the second network function based on the first request of the second network function. The analytics information may include one or more groups of network parameters. Accordingly, the first network function may provide accurate and effective analytics information to the second network function.

As shown in FIG. 4, FIG. 4 is a flowchart of an information processing method provided by some embodiments of the present disclosure, which may be applied to or applied to a fourth network function. The fourth network function may include a user plane function, for example, may include a UPF, a device or entity having a user plane function, and the like. As shown in FIG. 4, the method may include the following operations.

At operation 401, a first network parameter sent by a third network function may be received.

At operation 402, parameter configuration may be performed based on the first network parameter.

The first network parameter may be determined by the second network function based on the analytics information sent by the first network function. The first network parameter may be sent by the second network function to the third network function. The analytics information may include one or more groups of network parameters.

The explanations and meanings of the analytics information, the one or more groups of network parameters, and the analytics information may refer to the descriptions in the foregoing method embodiments.

In some embodiments of the present disclosure, the first network function may provide analytics information to the second network function based on the first request of the second network function. The analytics information may include one or more groups of network parameters. Accordingly, the first network function may provide accurate and effective analytics information to the second network function.

In some embodiments of the present disclosure, the first network function may be described by taking an NWDAF as an example, the second network function may be described by taking a PCF as an example, the third network function may be described by taking an SMF as an example, and the fourth network function may be described by taking a UPF as an example. In some embodiments of the present disclosure, the analytics information provided by the NWDAF to the PCF may include policy recommendation analytics information.

Considering that the NWDAF may have relatively global and comprehensive knowledge and perspective, in some embodiments of the present disclosure, an analytics result for driving policy control may be added. That is, the NWDAF may propose a recommendation or suggestion for policy control at granularities such as a terminal and a slice, etc., based on relatively comprehensive information, which may be relatively accurate and effective. The recommendation or suggestion may be converted by the PCF into a concrete QoS parameter and delivered end-to-end for execution.

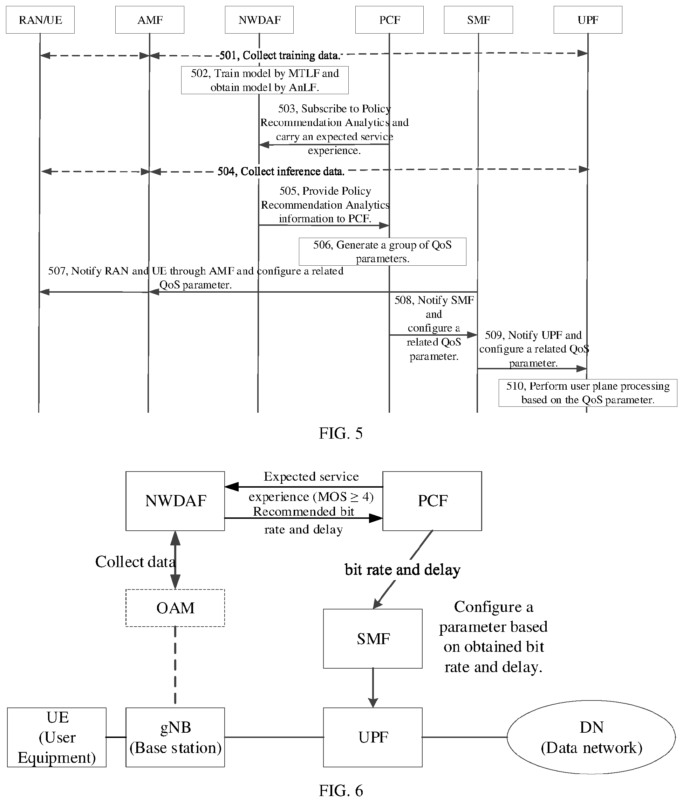

In a case where the NWDAF provides the recommendation or suggestion for policy control (i.e., policy recommendation analytics information), taking QoS parameter configuration oriented to service experience as an example, As shown in FIG. 5, the process may include the following operations.

At operation 501, the NWDAF may collect data from various data sources to train a model. For example, the NWDAF may collect data from a terminal, a RAN, an SMF, an Operation Administration and Maintenance (OAM), and the like.

At operation 502, the NWDAF, for example, a Model Training Logic Function (MTLF), may train a policy recommendation-related model, and an Analytic Logic Function (AnLF) of the NWDAF may obtain an analytics model.

At operation 503, taking QoS parameter configuration oriented to service experience as an example, the PCF may subscribe to policy recommendation analytics information from the NWDAF and may carry an expected service experience, such as a MOS value and the like.

At operation 503a, the PCF may send user subscription information to the NWDAF, such as different user types including gold, silver, bronze, and the like. This operation may be optional.

At operation 504, the NWDAF may collect real-time data from various data sources and may perform analytical inference using the analytics model to obtain policy recommendation analytics information.

At operation 505, based on the expected service experience, the NWDAF may provide policy recommendation analytics information to the PCF and may carry one or more groups of QoS parameters.

The QoS parameters may include parameters such as a bit rate, a delay, a jitter, a 5QI, or a bandwidth (for example, an MBR, a GBR), and the like.

Regarding a parameter of the 5QI, two different solutions may be provided as follows.
1) A parameter of a standardized 5QI value may be updated.
2) A customized 5QI value may be provided and a particular 5QI value may need to be newly defined.

In a case where the operation 503a is executed, that is, the PCF sends the user subscription information to the NWDAF, such as user types including gold, silver, bronze, and etc., the NWDAF may comprehensively consider the user subscription information during analytical inference, and then may deliver the recommendation or suggestion for policy control (such as policy recommendation analytics information) to the PCF.

At operation 506, the PCF may generate a group of QoS parameters.

In a case where the operation 503a is not executed, based on the analytics information provided by the NWDAF, the PCF may perform decision-making using the user subscription information to obtain a group of QoS parameters.

In a case where the operation 503a is executed, based on the analytics information provided by the NWDAF, the PCF may perform local decision-making to obtain a group of QoS parameters.

At operation 507, the PCF may notify a RAN and a User Equipment (UE) through an Authentication Management Function (AMF) to configure a related QoS parameter, including a bit rate, a delay, a jitter, a 5QI, or a bandwidth (for example, an MBR, a GBR), and the like.

At operation 508, the PCF may notify the SMF to configure a related QoS parameter, including a bit rate, a delay, a jitter, a 5QI, or a bandwidth (for example, an MBR, a GBR), and the like.

At operation 509, the SMF may notify the UPF to configure a related QoS parameter, including a bit rate, a delay, a jitter, a 5QI, or a bandwidth (for example, an MBR, a GBR), and the like.

At operation 510, based on the newly configured QoS parameter, the UPF may perform user plane processing.

As shown in FIG. 6, FIG. 6 is a schematic view of an exemplary scenario provided by some embodiments of the present disclosure. The NWDAF may be configured to collect data from various data sources, such as a Reference Signal Received Power (RSRP), a Reference Signal Received Quality (RSRQ), a Signal-to-Noise and Interference Ratio (SINR), and the like, to perform training and obtain a model. Based on an expected service experience (MOS ≥ 4) provided by the PCF, the NWDAF may perform analytical inference using the model and collected real-time data to determine a recommended parameter such as a bit rate and a delay, etc., and may send the recommended parameter to the PCF. The PCF may notify the SMF of the bit rate, the delay, and the like determined based on the recommended bit rate and the recommended delay. The SMF may notify the UPF. The SMF and the UPF may configure a related parameter.

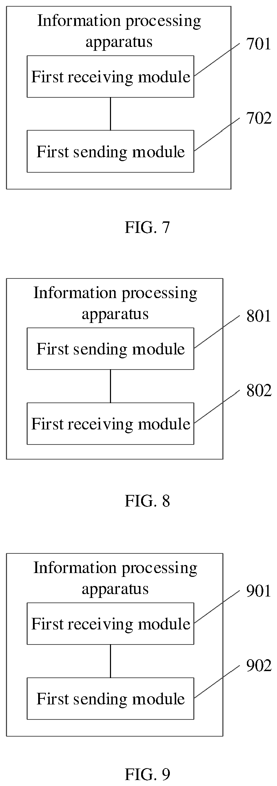

As shown in FIG. 7, FIG. 7 is a schematic structural view of an information processing apparatus provided by some embodiments of the present disclosure, which may be applied to a first network function. As shown in FIG. 7, the information processing apparatus may include a first receiving module 701 and a first sending module 702.

The first receiving module 701 may be configured to receive a first request sent by a second network function. The first request may be configured to subscribe to analytics information.

The first sending module 702 may be configured to send the analytics information to the second network function. The analytics information may include one or more groups of network parameters.

In some embodiments, the analytics information may include policy recommendation analytics information; and/or, the first request may include an expected service experience of the second network function and the analytics information may be determined or obtained based on the expected service experience.

In some embodiments, the apparatus may further include a second receiving module.

The second receiving module may be configured to receive user subscription information sent by the second network function.

In some embodiments, the first sending module 702 may be further configured to: determine the analytics information based on the user subscription information; and send the analytics information to the second network function.

In some embodiments, the apparatus may further include a first processing module and a second processing module.

The first processing module may be configured to obtain training data.

The second processing module may be configured to perform model training based on the training data and obtain an analytics model. The analytics model may be configured to determine or obtain the analytics information.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function, and the second network function may include a policy control function.

The apparatus provided by some embodiments of the present disclosure may be configured to execute the foregoing method embodiments, and implementation principles and technical effects thereof may be similar thereto, which will not be repeated herein.

As shown in FIG. 8, FIG. 8 is a schematic structural view of an information processing apparatus provided by some embodiments of the present disclosure, which may be applied to a second network function. As shown in FIG. 8, the information processing apparatus may include a first sending module 801 and a first receiving module 802.

The first sending module 801 may be configured to send a first request to a first network function. The first request may be configured to subscribe to analytics information.

The first receiving module 802 may be configured to receive analytics information sent by the first network function. The analytics information may include one or more groups of network parameters.

In some embodiments, the analytics information may include policy recommendation analytics information; and/or the first request may include an expected service experience of the second network function, and the analytics information may be determined or obtained based on the expected service experience.

In some embodiments, the apparatus may further include a second sending module.

The second sending module may be configured to send user subscription information to the first network function.

In some embodiments, the one or more groups of QoS parameters may include one or more of the following: a bit rate, a delay, a jitter, a 5QI, or a bandwidth.

In some embodiments, the apparatus may further include a first processing module.

The first processing module may be configured to determine or obtain a first network parameter based on the analytics information.

In some embodiments, the first processing module may be further configured to: determine or obtain the first network parameter based on the analytics information and/or user subscription information; or, determine or obtain the first network parameter based on the analytics information.

In some embodiments, the apparatus may further include a third sending module.

The third sending module may be configured to send the first network parameter to a network function.

In some embodiments, the first network function may include a network data analytics function.

The second network function may include a policy control function.

The network function may include one or more of: a RAN device, a terminal, a session management function, and a user plane function.

The apparatus provided by some embodiments of the present disclosure may be configured to execute the foregoing method embodiments, and implementation principles and technical effects thereof may be similar thereto, which will not be repeated herein.

As shown in FIG. 9, FIG. 9 is a schematic structural view of the information processing apparatus provided by some embodiments of the present disclosure, which may be applied to a third network function. As shown in FIG. 9, the information processing apparatus may include a first receiving module 901 and a first sending module 902.

The first receiving module 901 may be configured to receive a first network parameter sent by a second network function.

The first sending module 902 may be configured to send the first network parameter to a fourth network function.

In some embodiments, the first network parameter may be determined by the second network function based on analytics information sent by the first network function. The analytics information may include one or more groups of network parameters.

In some embodiments, the one or more groups of network parameters may include one or more groups of QoS parameters. The QoS parameters may include one or more of the following: a bit rate, a delay, a jitter, a 5QI, or a bandwidth.

In some embodiments, the first network function may include a network data analytics function.

The second network function may include a policy control function.

The third network function may include a session management function.

The fourth network function may include a user plane function.

The apparatus provided by some embodiments of the present disclosure may be configured to execute the foregoing method embodiments, and implementation principles and technical effects thereof may be similar thereto, which will not be repeated herein.

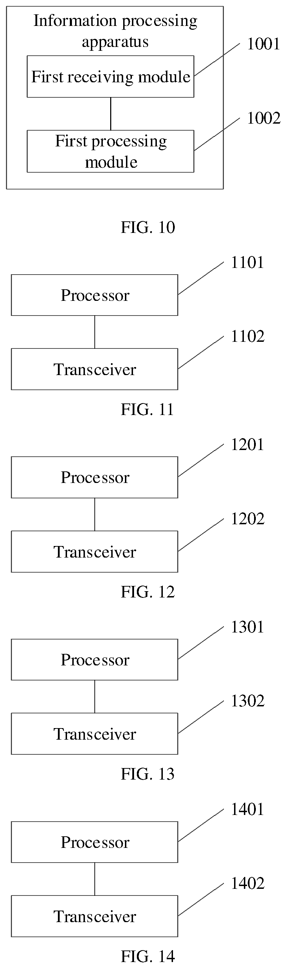

As shown in FIG. 10, FIG. 10 is a schematic structural view of the information processing apparatus provided by some embodiments of the present disclosure, which may be applied to a fourth network function. As shown in FIG. 10, the information processing apparatus may include a first receiving module 1001 and a first processing module 1002.

The first receiving module 1001 may be configured to receive a first network parameter sent by a third network function.

The first processing module 1002 may be configured to perform parameter configuration based on the first network parameter.

The first network parameter may be determined by a second network function based on analytics information sent by a first network function. The first network parameter may be sent by the second network function to the third network function. The analytics information may include one or more groups of network parameters.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function.

The second network function may include a policy control function.

The third network function may include a session management function.

The fourth network function may include a user plane function.

The apparatus provided by some embodiments of the present disclosure may be configured to execute the foregoing method embodiments, and implementation principles and technical effects thereof may be similar thereto, which will not be repeated herein.

As shown in FIG. 11, FIG. 11 schematic structural view of the information processing apparatus provided by some embodiments of the present disclosure, which may be applied to a first network function. As shown in FIG. 11, the information processing apparatus may include: a processor 1101 and a transceiver 1102.

The transceiver 1102 may be configured to receive a first request sent by a second network function and send analytics information to the second network function. The first request may be configured to subscribe to analytics information. The analytics information may include one or more groups of network parameters.

In some embodiments, the analytics information may include policy recommendation analytics information; and/or, the first request may include an expected service experience of the second network function, and the analytics information may be determined or obtained based on the expected service experience.

In some embodiments, the transceiver 1102 may be further configured to receive user subscription information sent by the second network function.

In some embodiments, the transceiver 1102 may be further configured to: determine the analytics information based on the user subscription information; and send the analytics information to the second network function.

In some embodiments, the processor 1101 may be further configured to: obtain training data; and perform model training based on the training data to obtain an analytics model. The analytics model may be configured to determine or obtain the analytics information.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the first network function may include a network data analytics function, and the second network function may include a policy control function.

The apparatus provided by some embodiments of the present disclosure may be configured to execute the foregoing method embodiments, and implementation principles and technical effects thereof may be similar thereto, which will not be repeated herein.

As shown in FIG. 12, FIG. 12 is a schematic structural view of the information processing apparatus provided by some embodiments of the present disclosure, which may be applied to a second network function. As shown in FIG. 12, the information processing apparatus may include: a processor 1201 and a transceiver 1202.

The transceiver 1202 may be configured to send a first request to a first network function, where the first request may be configured to subscribe to analytics information; and receive analytics information sent by the first network function, where the analytics information may include one or more groups of network parameters.

In some embodiments, the analytics information may include policy recommendation analytics information; and/or, the first request may include an expected service experience of the second network function, and the analytics information may be determined or obtained based on the expected service experience.

In some embodiments, the processor 1201 may be further configured to send user subscription information to the first network function.

In some embodiments, the one or more groups of network parameters may include: one or more groups of QoS parameters. The QoS parameters may include one or more of the following: a bit rate, a delay, a jitter, a 5QI, or a bandwidth.

In some embodiments, the processor 1201 may be further configured to determine or obtain a first network parameter based on the analytics information.

In some embodiments, the processor 1201 may be further configured to: determine or obtain the first network parameter based on the analytics information and/or user subscription information; or, determine or obtain the first network parameter based on the analytics information.

In some embodiments, the transceiver 1202 may be further configured to send the first network parameter to a network function.

In some embodiments, the first network function may include a network data analytics function.

The second network function may include a Policy Control Function.

The network function may include one or more of the following: a RAN device, a terminal, a session management function, and a user plane function.

The apparatus provided by some embodiments of the present disclosure may be configured to execute the method embodiments described above. The implementation principles and technical effects thereof may be similar, and details will not be repeated herein.

As shown in FIG. 13, FIG. 13 is a schematic structural view of the information processing apparatus provided by some embodiments of the present disclosure, applied to a third network function. As shown in FIG. 13, the information processing apparatus may include: a processor 1301 and a transceiver 1302.

The transceiver 1302 may be configured to receive the first network parameter sent by the second network function and send the first network parameter to a fourth network function.

The first network parameter may be determined by the second network function based on analytics information sent by the first network function, and the analytics information may include one or more groups of network parameters.

In some embodiments, the one or more groups of network parameters may include: one or more groups of QoS parameters. The QoS parameters may include one or more of the following: a bit rate, a delay, jitter, 5QI, and bandwidth.

In some embodiments, the first network function may include a network data analytics function.

The second network function may include a policy control function.

The third network function may include a session management function.

The fourth network function may include a user plane function.

The apparatus provided by some embodiments of the present disclosure may be configured to execute the method embodiments described above. The implementation principles and technical effects thereof may be similar, and details will not be repeated herein.

As shown in FIG. 14, FIG. 14 is a schematic structural view of the information processing apparatus provided by some embodiments of the present disclosure, applied to a fourth network function. As shown in FIG. 14, the information processing apparatus may include: a processor 1401 and a transceiver 1402.

The transceiver 1402 may be configured to receive a first network parameter sent by the third network function.

The processor 1401 may be configured to perform parameter configuration based on the first network parameter.

The first network parameter may be determined by the second network function based on analytics information sent by the first network function. The first network parameter may be sent by the second network function to the third network function. The analytics information may include one or more groups of network parameters.

In some embodiments, the one or more groups of network parameters may include: one or more groups of QoS parameters. The QoS parameters may include one or more of the following: a bit rate, a delay, jitter, 5QI, and bandwidth.

In some embodiments, the first network function may include a network data analytics function.

The second network function may include a policy control function.

The third network function may include a session management function.

The fourth network function may include a user plane function.

The apparatus provided by some embodiments of the present disclosure may be configured to execute the method embodiments described above. The implementation principles and technical effects thereof may be similar, and details will not be repeated herein.

It should be noted that, in the embodiments of the present disclosure, the division of the units may be illustrative and may merely be a logical functional division. In actual implementation, other division manners may be adopted. In addition, the functional units in the various embodiments of the present disclosure may be integrated into one processing unit, or may physically exist independently, or two or more units may be integrated into one unit. The above integrated units may be implemented in the form of hardware, or may be implemented in the form of software functional units.

In a case where the integrated units are implemented in the form of software functional units and sold or used as independent products, they may be stored in a processor-readable storage medium. Based on such understanding, the technical solution of the present disclosure, in essence, or the part contributing to the related art, or all or part of the technical solution may be embodied in the form of a software product. The computer software product may be stored in a storage medium and may include a plurality of instructions for causing a computer device (which may be a personal computer, a server, or a network device, etc.) or a processor to execute all or part of the operations of the methods described in some embodiments of the present disclosure. The foregoing storage medium may include: a USB flash drive, a removable hard disk, a Read-Only Memory (ROM), a Random Access Memory (RAM), a magnetic disk, or an optical disc, and other media capable of storing program codes.

Some embodiments of the present disclosure may further provide a communication device, which may include: a memory, a processor, and a program stored in the memory and executable on the processor. The processor may be configured to read the program in the memory to perform an operation of the information processing method described above.

Some embodiments of the present disclosure may further provide a readable storage medium, where a program may be stored on the readable storage medium. When the program is executed by a processor, an operation in some embodiments of the above information processing method may be performed and the same technical effects may be achieved. To avoid repetition, details are not described herein again. The readable storage medium may be any available medium or data storage device accessible by a processor, including but not limited to a magnetic memory (such as a floppy disk, a hard disk, a magnetic tape, a Magneto-Optical disc (MO), etc.), an optical memory (such as a Compact Disc (CD), a Digital Video Disc (DVD), a Blu-ray Disc (BD), a High-Definition Versatile Disc (HVD), etc.), a semiconductor memory (such as a ROM, an Erasable Programmable Read-Only Memory (EPROM), an Electrically Erasable Programmable Read-Only Memory (EEPROM), a NAND FLASH, a Solid State Disk/Drive (SSD), etc.), and the like.

It should be noted that, in this specification, the terms "include", "comprise", or any other variations thereof are intended to cover a non-exclusive inclusion, such that a process, a method, an article, or an apparatus including a series of elements may include not only those elements, but also other elements not expressly listed, or elements inherent to such process, method, article, or apparatus. Without further limitation, an element defined by the statement "including one..." may not exclude the presence of additional identical elements in the process, method, article, or apparatus including that element.

Through the descriptions of the foregoing embodiments, those skilled in the art may clearly understand that the methods in the above embodiments may be implemented by means of software in combination with a necessary general hardware platform, and may also be implemented by hardware, although in many cases the former may be a better implementation. Based on such understanding, the technical solution of the present disclosure, in essence, or the part contributing to the related art, may be embodied in the form of a software product. The computer software product may be stored in a storage medium (such as ROM/RAM, a magnetic disk, or an optical disc), and may include a plurality of instructions for causing a terminal (which may be a mobile phone, a computer, a server, an air conditioner, or a network device, etc.) to execute the methods described in some embodiments of the present disclosure.

Some embodiments of the present disclosure have been described above with reference to the accompanying drawings. However, the present disclosure may not be limited to the embodiments described above. The above embodiments may be illustrative rather than limiting. Under the inspiration of the present disclosure, those skilled in the art may make various modifications without departing from the purpose of the present disclosure and the protection scope of the claims, and all such modifications shall fall within the protection scope of the present disclosure.

## Claims

1. An information processing method, applied to a first network function and comprising:
receiving a first request sent by a second network function, wherein the first request is configured to subscribe to analytics information; and
sending the analytics information to the second network function, wherein the analytics information comprises one or more groups of network parameters.

2. The method as claimed in claim 1, wherein
the analytics information comprises policy recommendation analytics information; and/or
the first request comprises an expected service experience of the second network function, and the analytics information is determined or obtained based on the expected service experience.

3. The method as claimed in claim 1, further comprising:
receiving user subscription information sent by the second network function.

4. The method as claimed in claim 3, wherein the sending the analytics information to the second network function, comprises:
determining the analytics information based on the user subscription information; and
sending the analytics information to the second network function.

5. The method as claimed in claim 4, further comprising:
obtaining training data; and
performing model training based on the training data to obtain an analytics model, wherein the analytics model is configured to determine or obtain the analytics information.

6. The method as claimed in claim 1, wherein the one or more groups of network parameters comprise:
one or more groups of Quality of Service (QoS) parameters;
wherein the QoS parameters comprises one or more of the following: a bit rate, a delay, a jitter, a 5G QoS Identifier (5QI), or a bandwidth.

7. The method as claimed in any one of claims 1-6, wherein the first network function comprises a network data analytics function, and the second network function comprises a policy control function.

8. An information processing method, applied to a second network function and comprising:
sending a first request to a first network function, wherein the first request is configured to subscribe to analytics information; and
receiving analytics information sent by the first network function, wherein the analytics information comprises one or more groups of network parameters.

9. The method as claimed in claim 8, wherein
the analytics information comprises policy recommendation analytics information; and/or
the first request comprises an expected service experience of the second network function, and the analytics information is determined or obtained based on the expected service experience.

10. The method as claimed in claim 8, further comprising:
sending user subscription information to the first network function.

11. The method as claimed in claim 8, wherein the one or more groups of network parameters comprise:
one or more groups of QoS parameters;
wherein the QoS parameters comprises one or more of the following: a bit rate, a delay, a jitter, a 5QI, or a bandwidth.

12. The method as claimed in claim 8, further comprising:
determining or obtaining a first network parameter based on the analytics information.

13. The method as claimed in claim 12, wherein the determining or obtaining the first network parameter based on the analytics information, comprises:
determining or obtaining the first network parameter based on the analytics information and/or user subscription information; or
determining or obtaining the first network parameter based on the analytics information.

14. The method as claimed in claim 8, further comprising:
sending the first network parameter to a network function.

15. The method as claimed in claim 14, wherein
the first network function comprises a network data analytics function;
the second network function comprises a policy control function; and
the network function comprises one or more of the following: a Radio Access Network (RAN) device, a terminal, a session management function, and a user plane function.

16. An information processing method, applied to a third network function and comprising:
receiving a first network parameter sent by a second network function; and
sending the first network parameter to a fourth network function;
wherein the first network parameter is determined by the second network function based on analytics information sent by a first network function, and the analytics information comprises one or more groups of network parameters.

17. The method as claimed in claim 16, wherein the one or more groups of network parameters comprise:
one or more groups of QoS parameters;
wherein the QoS parameters comprises one or more of the following: a bit rate, a delay, a jitter, a 5QI, or a bandwidth.

18. The method as claimed in claim 16, wherein
the first network function comprises a network data analytics function;
the second network function comprises a policy control function;
the third network function comprises a session management function; and
the fourth network function comprises a user plane function.

19. An information processing method, applied to a fourth network function and comprising:
receiving a first network parameter sent by a third network function; and
performing parameter configuration based on the first network parameter;
wherein the first network parameter is determined by a second network function based on analytics information sent by a first network function, the first network parameter is sent by the second network function to the third network function, and the analytics information comprises one or more groups of network parameters.

20. The method as claimed in claim 19, wherein the one or more groups of network parameters comprise:
one or more groups of QoS parameters;
wherein the QoS parameters comprises one or more of the following: a bit rate, a delay, a jitter, a 5QI, or a bandwidth.

21. The method as claimed in claim 19, wherein
the first network function comprises a network data analytics function;
the second network function comprises a policy control function;
the third network function comprises a session management function; and
the fourth network function comprises a user plane function.

22. An information processing apparatus, applied to a first network function and comprising:
a first receiving module, configured to receive a first request sent by a second network function, wherein the first request is configured to subscribe to analytics information; and
a first sending module, configured to send analytics information to the second network function, wherein the analytics information comprises one or more groups of network parameters.

23. An information processing apparatus, applied to a second network function and comprising:
a first sending module, configured to send a first request to a first network function, wherein the first request is configured to subscribe to analytics information; and
a first receiving module, configured to receive analytics information sent by the first network function, wherein the analytics information comprises one or more groups of network parameters.

24. An information processing apparatus, applied to a third network function and comprising:
a first receiving module, configured to receive a first network parameter sent by a second network function; and
a first sending module, configured to send the first network parameter to a fourth network function;
wherein the first network parameter is determined by the second network function based on analytics information sent by a first network function, and the analytics information comprises one or more groups of network parameters.

25. An information processing apparatus, applied to a fourth network function and comprising:
a first receiving module, configured to receive a first network parameter sent by a third network function; and
a first processing module, configured to perform parameter configuration based on the first network parameter;
wherein the first network parameter is determined by a second network function based on analytics information sent by a first network function, the first network parameter is sent by the second network function to the third network function, and the analytics information comprises one or more groups of network parameters.

26. An information processing apparatus, applied to a first network function and comprising:
a processor; and
a transceiver, configured to:
receive a first request sent by a second network function, wherein the first request is configured to subscribe to analytics information; and
send analytics information to the second network function, wherein the analytics information comprises one or more groups of network parameters.

27. An information processing apparatus, applied to a second network function and comprising:
a processor; and
a transceiver, configured to:
send a first request to a first network function, wherein the first request is configured to subscribe to analytics information; and
receive analytics information sent by the first network function, wherein the analytics information comprises one or more groups of network parameters.

28. An information processing apparatus, applied to a third network function and comprising:
a processor; and
a transceiver, configured to:
receive a first network parameter sent by a second network function; and
send the first network parameter to a fourth network function;
wherein the first network parameter is determined by the second network function based on analytics information sent by a first network function, and the analytics information comprises one or more groups of network parameters.

29. An information processing apparatus, applied to a fourth network function and comprising:
a transceiver, configured to receive a first network parameter sent by a third network function; and
a processor, configured to perform parameter configuration based on the first network parameter;
wherein the first network parameter is determined by a second network function based on analytics information sent by a first network function, the first network parameter is sent by the second network function to the third network function, and the analytics information comprises one or more groups of network parameters.

30. A communication device, comprising: a memory, a processor, and a program stored in the memory and executable on the processor;
wherein the processor is configured to read the program in the memory to perform an operation of the information processing method as claimed in any one of claims 1-21.

31. A readable storage medium, configured to store a program, wherein when the program is executed by a processor, an operation of the information processing method as claimed in any one of claims 1-21 is performed.
